# EUROPEAN PATENT APPLICATION

(11) **EP 4 510 361 A1**
(43) Date of publication of application: **19.02.2025**
(21) Application number: 22943108.5
(22) Date of filing: 25.05.2022
(51) Int. Cl.: H01M 50/531

(54) **BATTERY CELL, BATTERY, AND ELECTRICAL DEVICE**

(71) Applicant: Contemporary Amperex Technology (Hong Kong) Limited, Central, Central And Western District (HK)
(72) Inventor: XU, Hu, Ningde, Fujian 352100 (CN)
(74) Representative: Ran, Handong
(86) International application number: PCT/CN2022/094968
(87) International publication number: WO 2023/225903

(57) **Abstract**

A battery cell (30), comprising a housing (31), at least one battery assembly (32), a first electrode terminal (33), a second electrode terminal (34), and a first current collector (40). The housing (31) comprises a first wall (313); the at least one battery assembly (32) is accommodated in the housing (31); the battery assembly (32) comprises a body portion (321), a first tab (322), and a second tab (323); the first tab (322) is led out from the end of the body portion (321) facing away from the first wall (313) in the thickness direction of the first wall (313); the second tab (323) is led out from the end of the body portion (321) facing the first wall (313) in the thickness direction; the first electrode terminal (33) and the second electrode terminal (34) are both provided on the first wall (313), and the second electrode terminal (34) is electrically connected to the second tab (323); and the first current collector (40) is accommodated in the housing (31) and is used for electrically connecting the first tab (322) and the first electrode terminal (33). The battery cell (30) can improve the consistency of the internal stress of the electrode assembly (32), so as to improve the stability and consistency of the charging and discharging performance of the electrode assembly (32), thereby prolonging the cycle life of the battery cell (30), and improving the safety of the battery cell (30) during operation and the volume energy density of a battery (10) composed of the battery cell (30). The present invention further relates to the battery (10) and an electrical device (1).

## Description

### TECHNICAL FIELD

This application relates to the field of battery technologies, and more specifically, to a battery cell, a battery, and an electric apparatus.

### BACKGROUND

Batteries are widely used in electronic devices such as mobile phones, laptops, battery carts, electric vehicles, electric aircrafts, electric ships, electric toy cars, electric toy ships, electric toy aircrafts, and electric tools. Battery cells may include nickel-cadmium battery cells, nickel-hydrogen battery cells, lithium-ion battery cells, secondary alkaline zinc-manganese battery cells, and the like.

In the development of battery cell technology, in addition to performance improvement of battery cells, safety is also an issue that needs to be considered. Therefore, how working safety of battery cells is enhanced is an urgent issue that needs to be solved in battery technology.

### SUMMARY

This application provides a battery cell, a battery, and an electric apparatus to improve the working safety of the battery cell.

According to a first aspect, an embodiment of this application provides a battery cell, where the battery cell includes a housing, at least one electrode assembly, a first electrode terminal, a second electrode terminal, and a first current collecting member; the housing includes a first wall; the at least one electrode assembly is accommodated in the housing; the electrode assembly includes a body portion, a first tab, and a second tab, where the first tab is led out from an end of the body portion along a thickness direction of the first wall facing away from the first wall, and the second tab is led out from an end of the body portion along the thickness direction facing the first wall; the first electrode terminal and the second electrode terminal are both arranged on the first wall, and the second electrode terminal is electrically connected to the second tab; and the first current collecting member is accommodated in the housing and is configured to electrically connect the first tab and the first electrode terminal.

The battery cell provided in this embodiment of this application, the first electrode terminal and the second electrode terminal are both arranged on the first wall, the first tab and the second tab are arranged at two ends of the electrode assembly along a first direction respectively, and the first tab and the first electrode terminal are connected through the first current collecting member, which achieves the purpose that both the first electrode terminal and the second electrode terminal are arranged at the same end of the battery cell and the housing is uncharged. In this way, a connection structure between battery cells can be simplified, and the space occupied during pack assembly of battery cells can be reduced, which helps to increase the volumetric energy density of the battery formed after the pack assembly of the battery cells. Additionally, as the housing is uncharged during working of the battery cell, the risk of short circuit of the housings of adjacent battery cells is greatly reduced, which helps to enhance the working safety of the battery cell.

In some embodiments, the first current collecting member includes a first current collecting portion and a first connecting portion, where the first current collecting portion is located on a side of the first tab facing away from the body portion and connected to the first tab, and the first connecting portion is bent relative to the first current collecting portion and configured to connect the first current collecting portion and the first electrode terminal. Such an arrangement facilitates the first current collecting member to connect the first tab and the first electrode terminal.

In some embodiments, the first connecting portion is located on the outside of the body portion and arranged parallel to the body portion. Such an arrangement facilitates flexible arrangement of a position of the first connecting portion based on the internal space of the housing, so as to reasonably utilize the internal space of the housing, which helps to increase the volumetric energy density of the battery cell.

In some embodiments, the housing has a second wall and a third wall intersecting each other, where the second wall and the third wall extend along the thickness direction, and the second wall, the third wall, and the adjacent electrode assembly enclose a first accommodation space; and the first connecting portion is at least partially accommodated in the first accommodation space. This helps to reduce the additional space occupied by the first connecting portion in the housing, thereby increasing the volumetric energy density of the battery cell.

In some embodiments, an orthographic projection of at least a portion of the first electrode terminal along the thickness direction is located within the first accommodation space. This helps to simplify the connection structure of the first connecting portion and the first electrode terminal.

In some embodiments, the electrode assembly is provided in plurality, the body portion of each electrode assembly is generally cylindrical, the housing has a fourth wall extending along the thickness direction, adjacent two electrode assemblies and the fourth wall enclose a second accommodation space, and the first connecting portion is at least partially accommodated in the second accommodation space. This helps to reduce the additional space occupied by the first connecting portion in the housing, thereby increasing the volumetric energy density of the battery cell.

In some embodiments, an orthographic projection of at least a portion of the first electrode terminal along the thickness direction is located within the second accommodation space. This helps to simplify the connection structure of the first connecting portion and the first electrode terminal.

In some embodiments, the electrode assembly is provided in N; the first current collecting portion includes a first current collecting sub-portion, a second current collecting sub-portion, and a connecting sub-portion, where the first connecting portion is connected to the connecting sub-portion, the connecting sub-portion connects the first current collecting sub-portion and the second current collecting sub-portion, the first current collecting sub-portion is connected to N1 first tabs, and the second current collecting sub-portion is connected to N2 first tabs; where N≥2, N1≥1, N2≥1, N, N1, and N2 are all positive integers, N1+N2=N, |N1-N2|≤1. In this way, magnitudes of currents flowing from the first current collecting sub-portion and the second current collecting sub-portion to two sides of the connecting sub-portion are as equal as possible, or a difference thereof is minimized, which helps to improve the overall current-carrying capacity of the first current collecting portion, reduces the risk of temperature rise caused by excessive current in the first current collecting portion, and further improves the working safety of the battery cell.

In some embodiments, the first connecting portion is provided with a fuse portion, where the fuse portion is configured to be blown when a current flowing through the fuse portion reaches a threshold. This further improves the working safety of the battery cell.

In some embodiments, the first current collecting member further includes an insulating layer, where the insulating layer envelops at least a portion of the first connecting portion to insulate and separate the first connecting portion from the body portion. Such an arrangement can reduce the risk of short circuit inside the battery cell caused by an electrical connection between the first connecting portion and the body portion of the electrode assembly, thereby improving the working safety of the battery cell.

In some embodiments, the first current collecting member further includes a second connecting portion, where the second connecting portion is connected to an end of the first connecting portion far away from the first current collecting portion and bent relative to the first connecting portion, and the second connecting portion is configured to connect the first electrode terminal. Such an arrangement allows for the reasonable positioning of the first electrode terminal based on the overall spatial layout of the battery cell and achieves the electrical connection between the first electrode terminal and the first tab.

In some embodiments, a first concave portion is provided on a side of the first electrode terminal facing away from the electrode assembly, and a bottom wall of the first concave portion abuts against the second connecting portion and is welded to the second connecting portion. Such an arrangement allows for the welding of the second connecting portion and the first electrode terminal through a penetration welding process, which helps to reduce the internal space of the housing and increase the volumetric energy density of the battery cell.

In some embodiments, the battery cell further includes a second current collecting member, where the second current collecting member is at least partially arranged between the second electrode terminal and the second tab and is configured to connect the second electrode terminal and the second tab. This facilitates the electrical connection between the second electrode terminal and the second tab.

In some embodiments, the second current collecting member has a notch at its edge, and the first electrode terminal is arranged opposite the notch along the thickness direction. Such an arrangement allows for the flexible positioning of the first electrode terminal by reasonably setting the size and position of the notch, which is conducive to fully utilizing the internal space of the housing and increasing the volumetric energy density of the battery cell as much as possible.

According to a second aspect, an embodiment of this application provides a battery including the battery cell according to any one of the foregoing embodiments.

According to a third aspect, this application provides an electric apparatus including the battery in the foregoing embodiments, where the battery is configured to supply electrical energy.

### BRIEF DESCRIPTION OF DRAWINGS

To describe the technical solutions of the embodiments of this application more clearly, the following briefly describes the accompanying drawings required for describing the embodiments of this application. Apparently, the accompanying drawings described below show merely some embodiments of this application, and persons of ordinary skill in the art may still derive other drawings from the accompanying drawings without creative efforts.
FIG. 1 is a schematic structural diagram of a vehicle according to an embodiment of this application;
FIG. 2 is a schematic structural diagram of a battery according to an embodiment of this application;
FIG. 3 is a schematic structural diagram of a battery module according to an embodiment of this application;
FIG. 4 is a schematic structural diagram of a battery cell according to an embodiment of this application;
FIG. 5 is a schematic cross-sectional view of a battery cell along a direction perpendicular to a thickness direction according to an embodiment of this application;
FIG. 6 is a schematic cross-sectional view of another battery cell along a direction perpendicular to a thickness direction according to an embodiment of this application;
FIG. 7 is a schematic cross-sectional view of still another battery cell along a direction perpendicular to a thickness direction according to an embodiment of this application;
FIG. 8 is a schematic cross-sectional view of yet another battery cell along a direction perpendicular to a thickness direction according to an embodiment of this application;
FIG. 9 is a schematic cross-sectional view of a further battery cell along a direction perpendicular to a thickness direction according to an embodiment of this application;
FIG. 10 is a schematic cross-sectional view of a still further battery cell along a direction perpendicular to a thickness direction according to an embodiment of this application;
FIG. 11 is a schematic structural diagram of another battery cell according to an embodiment of this application;
FIG. 12 is a schematic structural diagram of still another battery cell according to an embodiment of this application; and
FIG. 13 is a schematic structural diagram of a battery cell according to an embodiment of this application with a housing and an electrode assembly omitted.

In the accompanying drawings, the figures are not necessarily drawn to scale.

### Description of reference signs:

1. vehicle; 1a. motor; 1b. controller;
10. battery; 11. first box portion; 12. second box portion;
20. battery module;
30. battery cell; 30a. first accommodation space; 30b. second accommodation space; 30c. accommodation cavity;
31. housing; 311. shell; 311a. opening; 312. end cover; 313. first wall; 314. second wall; 315. third wall; 316. fourth wall;
32. electrode assembly; 321. body portion; 322. first tab; 323. second tab;
33. first electrode terminal; 33a. first concave portion;
34. second electrode terminal; 34a. second concave portion;
40. first current collecting member; 41. first current collecting portion; 411. first current collecting sub-portion; 412. second current collecting sub-portion; 413. connecting sub-portion; 42. first connecting portion; 43. second connecting portion; 44. insulating layer;
50. second current collecting member; 50a. notch; and
X. thickness direction.

### DESCRIPTION OF EMBODIMENTS

To make the objectives, technical solutions, and advantages of the embodiments of this application clearer, the following clearly describes the technical solutions in the embodiments of this application with reference to the accompanying drawings in the embodiments of this application. Apparently, the described embodiments are some but not all of the embodiments of this application. All other embodiments obtained by persons of ordinary skill in the art based on the embodiments of this application without creative efforts shall fall within the protection scope of this application.

Unless otherwise defined, all technical and scientific terms used in this application shall have the same meanings as commonly understood by persons skilled in the art to which this application relates. The terms used in the specification of this application are intended to merely describe the specific embodiments rather than to limit this application. The terms "include", "comprise", and any variations thereof in the specification, claims, and brief description of drawings of this application are intended to cover non-exclusive inclusions. In the specification, claims, or accompanying drawings of this application, the terms "first", "second", and the like are intended to distinguish between different objects rather than to describe a particular order or a primary-secondary relationship.

Reference to "embodiment" in this application means that specific features, structures, or characteristics described with reference to the embodiment may be included in at least one embodiment of this application. The word "embodiment" appearing in various places in this specification does not necessarily refer to the same embodiment or an independent or alternative embodiment that is exclusive of other embodiments.

In the description of this application, it should be noted that unless otherwise specified and defined explicitly, the terms "mounting", "connection", "joining", and "attachment" should be understood in their general senses. For example, they may refer to a fixed connection, a detachable connection, or an integral connection, and may refer to a direct connection, an indirect connection via an intermediate medium, or an internal communication between two elements. Persons of ordinary skill in the art can understand specific meanings of these terms in this application as appropriate to specific situations.

The term "and/or" in this application describes an associative relationship that indicates three possible relationships, for example, C and/or D can mean: the existence of only C, the existence of both C and D, or the existence of only D. In addition, the character "/" in this application generally indicates an "or" relationship between the contextually associated objects.

In the embodiments of this application, the same reference signs denote the same components. For brevity, in different embodiments, detailed descriptions of the same components are not repeated. It should be understood that, as shown in the accompanying drawings, sizes such as thickness, length, and width of various members and sizes such as thickness, length, and width of integrated devices in the embodiments of this application are merely for illustrative purposes and should not constitute any limitations on this application.

In this application, "a plurality of" means more than two (inclusive).

In this application, a battery cell may include a lithium-ion secondary battery cell, a lithium-ion primary battery cell, a lithium-sulfur battery cell, a sodium-lithium-ion battery cell, a sodium-ion battery cell, a magnesium-ion battery cell, or the like. This is not limited in the embodiments of this application. The battery cell may be cylindrical, flat, cuboid, or of other shapes. This is not limited in the embodiments of this application either. Battery cells are typically divided into three types by packaging method: cylindrical cell, prismatic cell, and pouch cell. The type of the battery cell is not limited in the embodiments of this application either.

The battery mentioned in the embodiments of this application is a single physical module that includes one or more battery cells for providing a higher voltage and capacity. For example, the battery mentioned in this application may include a battery module, a battery pack, or the like. A battery typically includes a box configured to enclose one or more battery units. The box may prevent liquids or other foreign matter from affecting charging or discharging of the battery unit.

The battery cell includes an electrode assembly and an electrolyte. The electrode assembly includes a positive electrode plate, a negative electrode plate, and a separator. The battery cell works primarily relying on migration of metal ions between the positive electrode plate and the negative electrode plate. The positive electrode plate includes a positive electrode current collector and a positive electrode active substance layer. The positive electrode active substance layer is applied on a surface of the positive electrode current collector. The positive electrode current collector includes a positive electrode current collecting portion and a positive electrode protrusion protruding from the positive electrode current collecting portion. The positive electrode current collecting portion is coated with the positive electrode active substance layer, at least part of the positive electrode protrusion is uncoated with the positive electrode active substance layer, and the positive electrode protrusion is used as a positive electrode tab. A lithium-ion battery is used as an example. The positive electrode current collector may be made of aluminum, the positive electrode active substance layer includes a positive electrode active substance, and the positive electrode active substance may be lithium cobalt oxide, lithium iron phosphate, ternary lithium, lithium manganate oxide, or the like. The negative electrode plate includes a negative electrode current collector and a negative electrode active substance layer. The negative electrode active substance layer is applied on a surface of the negative electrode current collector. The negative electrode current collector includes a negative electrode current collecting portion and a negative electrode protrusion protruding from the negative electrode current collecting portion. The negative electrode current collecting portion is coated with the negative electrode active substance layer, at least part of the negative electrode protrusion is uncoated with the negative electrode active substance layer, and the negative electrode protrusion is used as a negative electrode tab. The negative electrode current collector may be made of copper, the negative electrode active substance layer includes a negative electrode active substance, and the negative electrode active substance may be carbon, silicon, or the like. To allow a large current to pass through without any fusing, a plurality of positive electrode tabs are provided and stacked together, and a plurality of negative electrode tabs are provided and stacked together. The separator may be made of PP (polypropylene, polypropylene), PE (polyethylene, polyethylene), or the like. In addition, the electrode assembly may be a wound structure or a stacked structure. However, the embodiments of this application are not limited thereto.

After discovering the problem of low working safety of battery cells, the inventor conducted a systematic analysis and research on the structure and assembly process of the battery cells. It was found that battery cells, such as cylindrical battery cells, usually have two structural forms. One is that the battery cell has an electrode terminal at one end along an axial direction, and the housing is charged during working. Although this type of battery cell has a simple connection form, it is easy to cause safety problems because the housing needs to be charged. The other type is that the battery cell has electrode terminals at two ends along the axial direction, and the housing is uncharged during working. However, as this type of battery has electrode terminals at two ends, the electrode terminals at the two ends need to be connected through busbars during installation, so as to achieve series and parallel connections between battery cells. The numerous busbars not only occupy more space but also tend to cause more safety problems. Therefore, the battery cells in the prior art are constrained by their structural forms, leading to low safety problems.

Based on the foregoing problem found by the inventor, the inventor has improved the structure of the battery cell. The technical solution described in the embodiments of this application is applicable to a battery cell, a battery containing such battery cell, and an electric apparatus using such battery.

According to the battery cell provided in the embodiments of this application, the first tab and the second tab are respectively arranged at opposite ends of the body portion of the electrode assembly, the first electrode terminal and the second electrode terminal are arranged at an end of the battery cell close to the second electrode terminal, and the first tab and the first electrode terminal are connected through a first current collecting member.

The battery cell provided in the embodiments of this application can achieve the purpose of having two electrode terminals at one end of the battery cell and the shell being uncharged. In this way, it can not only simplify the connection structure between battery cells, reduce the space occupied by the battery cells, but also improve the safety performance during working of the battery cells.

The electric apparatus may be a vehicle, a mobile phone, a portable device, a notebook computer, a ship, a spacecraft, an electric toy, an electric tool, or the like. The vehicle may be a fossil fuel vehicle, a natural gas vehicle, or a new energy vehicle. The new energy vehicle may be a battery electric vehicle, a hybrid electric vehicle, a range-extended electric vehicle, or the like. The spacecraft includes an airplane, a rocket, a space shuttle, a spaceship, and the like. The electric toy includes a fixed or mobile electric toy, for example, a game console, an electric toy car, an electric toy ship, and an electric toy airplane. The electric tool includes an electric metal cutting tool, an electric grinding tool, an electric assembly tool, and an electric railway-specific tool, for example, an electric drill, an electric grinder, an electric wrench, an electric screwdriver, an electric hammer, an electric impact drill, a concrete vibrator, and an electric planer. The embodiments of this application impose no special limitation on the foregoing electric device.

For ease of description, the electric apparatus being a vehicle is used as example for description of the following embodiments.

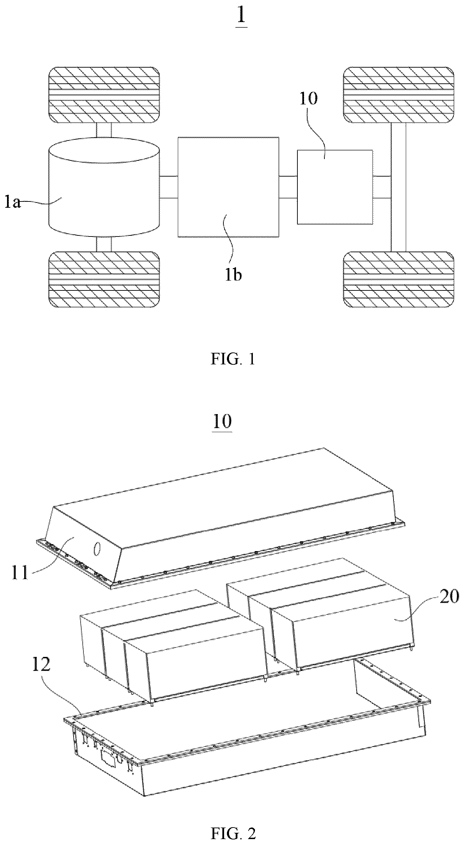

As shown in FIG. 1, the vehicle 1 is provided with a battery 10 inside. The battery 10 may be provided at the bottom, head, or tail of the vehicle 1. The battery 10 may be configured to supply power to the vehicle 1. For example, the battery 10 may be used as an operational power source for the vehicle 1.

The vehicle 1 may further include a controller 1b and a motor 1a. The controller 1b is configured to control the battery 10 to supply power to the motor 1a, for example, to satisfy power needs of starting, navigation, and driving of the vehicle 1.

In some embodiments of this application, the battery 10 can be used as not only an operational power source for the vehicle 1 but also a traction power source for the vehicle 1, replacing or partially replacing fossil fuel or natural gas to provide driving traction for the vehicle 1.

As shown in FIG. 2, the battery 10 includes a battery cell (not shown in FIG. 2). The battery 10 may further include a box for accommodating the battery cell.

The box is configured to accommodate the battery cell, and the box may have various structures. In some embodiments, the box may include a first box portion 11 and a second box portion 12. The first box portion 11 and the second box portion 12 cover each other. The first box portion 11 and the second box portion 12 together define an accommodation space for the battery cell. The second box portion 12 may be a hollow structure with an opening at an end, the first box portion 11 is a plate-shaped structure, and the first box portion 11 is engaged with the opening side of the second box portion 12 to form the box having an accommodation space. Both the first box portion 11 and the second box portion 12 may be hollow structures with an opening at a side. The opening side of the first box portion 11 is engaged with the opening side of the second box portion 12 to form a box with an accommodation space. Certainly, the first box portion 11 and the second box portion 12 may be in various shapes, such as cylinder or cuboid.

In order to improve airtightness after connection of the first box portion 11 and the second box portion 12, a sealing member such as sealing gum and sealing ring may further be arranged between the first box portion 11 and the second box portion 12.

Assuming that the first box portion 11 is engaged with the second box portion 12, the first box portion 11 may also be referred to as an upper cover, and the second box portion 12 may also be referred to as a lower box.

In the battery 10, the battery cell may be provided in one or may be provided in plurality. If the battery cell is provided in plurality, the plurality of battery cells may be connected in series, parallel, or series-parallel. Being connected in series-parallel means a combination of series and parallel connections of the plurality of battery units. The plurality of battery cells may be directly connected in series, parallel, or series-parallel, and then an entirety of the plurality of battery cells is accommodated in the box; or the plurality of battery cells may be connected in series, parallel, or series-parallel first to form a battery module 20. The plurality of battery modules 20 are then connected in series, parallel, or series-parallel to form an entirety which is accommodated in the box.

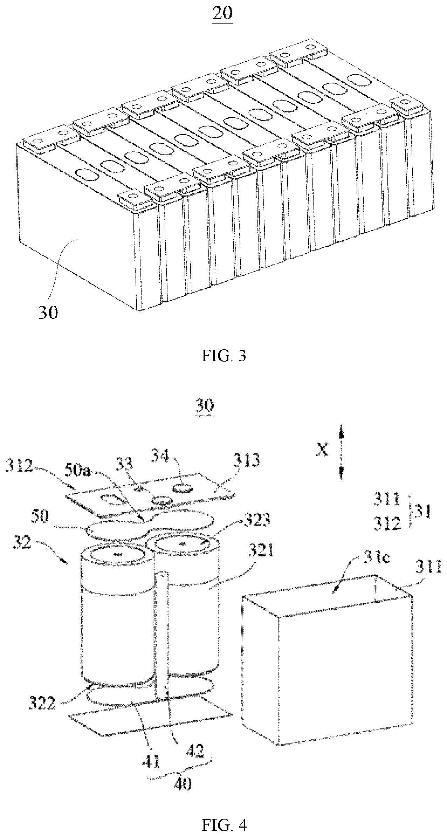

In some embodiments, referring to FIG. 3, FIG. 3 is a schematic structural diagram of the battery module 20 shown in FIG. 2. In the battery module 20, the battery cell 30 is provided in plurality. The plurality of battery cells 30 are connected in series, parallel, or series-parallel first to form battery modules 20. The plurality of battery modules 20 are then connected in series, parallel, or series-parallel to form an entirety which is accommodated in the box.

In some embodiments, the plurality of battery cells 30 in the battery module 20 may be electrically connected via a busbar, so that the plurality of battery cells 30 in the battery module 20 are connected in series, parallel, or series-parallel.

Referring to FIG. 4, FIG. 4 is a schematic exploded view of the battery cell 30 shown in FIG. 3.

As shown in FIG. 4, the battery cell 30 provided in the embodiments of this application includes a housing 31, at least one electrode assembly 32, a first electrode terminal 33, a second electrode terminal 34, and a first current collecting member 40. The housing 31 includes a first wall 313. The at least one electrode assembly 32 is accommodated in the housing 31, and the electrode assembly 32 includes a body portion 321, a first tab 322, and a second tab 323. The first tab 322 is led out from an end of the body portion 321 along a thickness direction X of the first wall 313 facing away from the first wall 313, and the second tab 323 is led out from an end of the body portion 321 along the thickness direction X of the first wall 313 facing the first wall 313. The first electrode terminal 33 and the second electrode terminal 34 are both arranged on the first wall 313, and the second electrode terminal 34 is electrically connected to the second tab 323. The first current collecting member 40 is accommodated in the housing 31 and is configured to electrically connect the first tab 322 and the first electrode terminal 33.

Optionally, the housing 31 has an accommodation cavity 30c, and the electrode assembly 32 is accommodated in the accommodation cavity 30c.

In some embodiments, the housing 31 may include a shell 311 and an end cover 312, where the shell 311 is a hollow structure with an opening on a side, and the end cover 312 is engaged with the opening of the shell 311 to form a hermetical connection so as to form a hermetical space for accommodating the electrode assembly 32 and the electrolyte.

During assembly of the battery cell 30, the electrode assembly 32 may be placed in the shell 311 first, then the end cover 312 is engaged with the opening of the shell 311, and an electrolyte is injected into the shell 311 through an electrolyte injection port on the end cover 312.

In some embodiments, the housing 31 may also be configured to accommodate an electrolyte such as a liquid electrolyte. The housing 31 may have various structure forms.

The shell 311 may have a variety of shapes, for example, cylinder and cuboid. A shape of the shell 311 may be determined according to a specific shape of the electrode assembly 32. For example, if the electrode assembly 32 is a cylindrical structure, the shell 311 may be selected as a cylindrical structure. If the electrode assembly 32 is a cuboid structure, the shell 311 may be selected as a cuboid structure. In FIG. 4, for example, the shell 311 and the electrode assembly 32 are both cuboid structures.

The shell 311 may be made of various materials, such as copper, iron, aluminum, stainless steel, and aluminum alloy, which are not particularly limited in the embodiments of this application.

Optionally, a shape of a cross section of the current collecting member 31 along a direction perpendicular to the thickness direction X may be circular, rectangular, elliptical, annular, arc-shaped, or the like. For example, a shape of a cross section of the housing 31 along a direction perpendicular to the thickness direction X has both a straight portion and an arc-shaped portion, and the two may enclose in various forms to form a closed shape.

The electrode assembly 32 in the shell 311 may be provided in one or plurality. In FIG. 4, the electrode assembly 32 accommodated in the shell 311 is provided in two.

In some embodiments, the electrode assembly 32 further includes a negative electrode plate, a positive electrode plate, and a separator. The electrode assembly 32 may be a wound structure formed by the positive electrode plate, the separator, and the negative electrode plate through winding. The electrode assembly 32 may alternatively be a laminated structure formed by the positive electrode plate, the separator, and the negative electrode plate through lamination.

The positive electrode plate may include a positive electrode current collector and a positive electrode active substance layer. The positive electrode active substance layer is provided on a surface of the positive electrode current collector. The negative electrode plate may include a negative electrode current collector and a negative electrode active substance layer. The negative electrode active substance layer is applied on a surface of the negative electrode current collector. The separator is located between the positive electrode plate and the negative electrode plate to separate the positive electrode plate from the negative electrode plate, thereby reducing the risk of short circuit between the positive electrode plate and the negative electrode plate.

The separator may be made of PP (polypropylene, polypropylene), PE (polyethylene, polyethylene), or the like.

Optionally, one of the first tab 322 and the second tab 323 of the electrode assembly 32 may be set as a positive electrode tab, and the other as a negative electrode tab. The positive electrode tab may be a portion of the positive electrode current collector that is coated with no positive electrode active substance layer. The negative electrode tab may be a portion of the negative electrode current collector that is coated with no negative electrode active substance layer.

Optionally, the first wall 313 may be a portion of the shell 311 of the housing 31, or may be a portion of the end cover 312 of the housing 31.

Optionally, one electrode assembly 32 may be provided in the housing 31 of the battery cell 30, or two or more electrode assemblies 32 may be provided in the housing 31 of the battery cell 30. In an embodiment of the battery cell 30 including three or more electrode assemblies 32, the plurality of electrode assemblies 32 may be arranged in one direction or in plurality of directions, or may be arranged according to actual needs.

The thickness direction X of the first wall 313 may be a direction perpendicular to a surface of the first wall 313 and pointing towards the outside of the battery cell 30, from a side of the first wall 313 close to the accommodation cavity 30c of the battery cell 30.

The first tab 322 and the second tab 323 are respectively led out from two ends of the body portion 321 along the first direction, the first electrode terminal 33 and the second electrode terminal 34 are both led out from the first wall 313, the electrode assembly 32 is provided with the second tab 322 at an end close to the first wall 313, and the first tab 323 is provided at an end of the electrode assembly 32 far away from the first wall 313. Therefore, the first current collecting member 40 is arranged to electrically connect the first electrode terminal 33 and the first tab 322.

Optionally, the first current collecting member 40 may be integrally formed, then bent, with one end connected to the first tab 322 and the other end connected to the first electrode terminal 33. Alternatively, the first current collecting member 40 may be arranged as a plurality of portions, with two of the plurality of portions respectively connected to the first tab 322 and the first electrode terminal 33, and then the two may be directly connected or connected through an intermediate connector. The structural form and shape of the first current collecting member 40 are not limited, provided that it can achieve the electrical connection between the first tab 322 and the first electrode terminal 33.

Optionally, the first current collecting member 40 may be provided in one, or the first current collecting member 40 may be provided in two or more, and different first current collecting members 40 may respectively connect some of the plurality of electrode assemblies 32.

In an embodiment of the battery cell 30 including a plurality of first current collecting members 40, the plurality of first current collectors 40 may be connected to the same first electrode terminal 33, or the plurality of first electrode terminals 33 may be arranged on the first wall 313, different first current collectors 40 are respectively connected to different first electrode terminals 33, and then the plurality of first electrode terminals 33 are electrically connected outside the battery cell 3. Such an arrangement can shunt the current of the plurality of electrode assemblies 32 in the battery cell 30, and improve the overall current-carrying capacity of the first current collecting member 40.

Optionally, the first current collecting member 40 may be arranged between the electrode assembly 32 and the housing 31, or between adjacent two electrode assemblies 32, or in a space enclosed by the plurality of electrode assemblies 32 and the housing 31, and may be specifically arranged as required.

Optionally, the first current collecting member 40 may be in a form of sheet or strip or in other structural forms.

Optionally, the body portion 321 of the electrode assembly 32 may be cylindrical or square. The electrode assembly 32 may be a laminated electrode assembly 32 or may be a wound electrode assembly 32.

Optionally, the second electrode terminal 34 and the second tab 323 may be connected through an intermediate connector or may be directly connected.

Optionally, the first current collecting member 40 and the first electrode terminal 33 may be connected through welding or riveting or in other connection methods.

It can be understood that the first electrode terminal 33 and the second electrode terminal 34 are both arranged on the first wall 313, and the first electrode terminal 33 and the first tab 322 are connected through the first current collecting member 40. In this way, the first electrode terminal 33 and the second electrode terminal 34 may be arranged at the same end of the housing 31, and the housing 31 of the battery cell 30 may be uncharged during working of the battery cell 30. As the first electrode terminal 33 and the second electrode terminal 34 are both arranged at the same end of the housing 31, a quantity of busbars used to connect the battery cells 30 and the space occupied can be reduced during pack assembly of the battery cells 30, the assembly difficulty of the battery cells 30 during the pack assembly is reduced, and the battery 10 formed by the battery cells 30 after the pack assembly has higher safety during working. Additionally, as the housing 31 is uncharged during working of the battery cell 30, the safety performance of the battery cell 30 during working can be greatly improved.

Therefore, the battery cell 30 provided in this embodiment of this application is such arranged that the first electrode terminal 33 and the second electrode terminal 34 are arranged on the first wall 313, the first tab 322 and the second tab 323 are arranged at two ends of the electrode assembly 32 along the thickness direction X respectively, and the first tab 322 and the first electrode terminal 33 are connected through the first current collecting member 40, so as to achieve the purpose that the first electrode terminal 33 and the second electrode terminal 34 are arranged at the same end of the battery cell 30 and the housing 31 is uncharged. In this way, the connection structure between adjacent battery cells 30 can be simplified, the space occupied by the battery cells 30 during the pack assembly is reduced, which helps to increase the volumetric energy density of the battery 10 formed by the battery cells 30 after the pack assembly. Additionally, as the housing 31 is uncharged during working of the battery cell 30, the risk of short circuit of the housings 31 of adjacent battery cells 30 is greatly reduced, which helps to improve the working safety of the battery cell 30.

In some embodiments, the first current collecting member 40 includes a first current collecting portion 41 and a first connecting portion 42, where the first current collecting portion 41 is located on a side of the first tab 322 facing away from the body portion 321 and connected to the first tab 322. The first connecting portion 42 is bent relative to the first current collecting portion 41 and connects the first current collecting portion 41 and the first electrode terminal 33.

Specifically, the first current collecting portion 41 connects the first tab 322. In the embodiment of the battery cell 30 including a plurality of electrode assemblies 32, the first current collecting portion 41 may connect a plurality of first tabs 322, and the first tab 322 and the first electrode terminal 33 are electrically connected through the first connecting portion 42.

Optionally, depending on the relative position of the first electrode terminal 33, the first connecting portion 42 may extend along the thickness direction X and be connected to the first electrode terminal 33, or a portion of the first connecting portion 42 may extend along the thickness direction X, and another portion extends along a direction perpendicular to the thickness direction X to be connected to the first electrode terminal 33.

Optionally, a shape of a cross section of the portion of the first connecting portion 42 extending along a direction perpendicular to the thickness direction X may be polygonal, circular, elliptical, annular, arc-shaped, or other shapes, which are not limited herein and can be selected according to actual needs.

Optionally, the first connecting portion 42 may be arranged inside the body portion 321 or outside the body portion 321, for example, the first connecting portion 42 is sleeved outside the body portion 321.

In some embodiments, the first connecting portion 42 is located on the outside of the body portion 321 and arranged parallel to the body portion 321.

Specifically, the first connecting portion 42 is located on the outside of the body portion 321 and arranged parallel to the body portion 321, to be specific, the first connecting portion 42 is located between a portion of an outer surface of the body portion 321 and the housing 31, rather than being sleeved on the body portion 321.

Such an arrangement facilitates flexible positioning of the first connecting portion 42 based on the internal space of the housing 31, so as to reasonably utilize the internal space of the housing 31, which helps to increase the volumetric energy density of the battery cell 30.

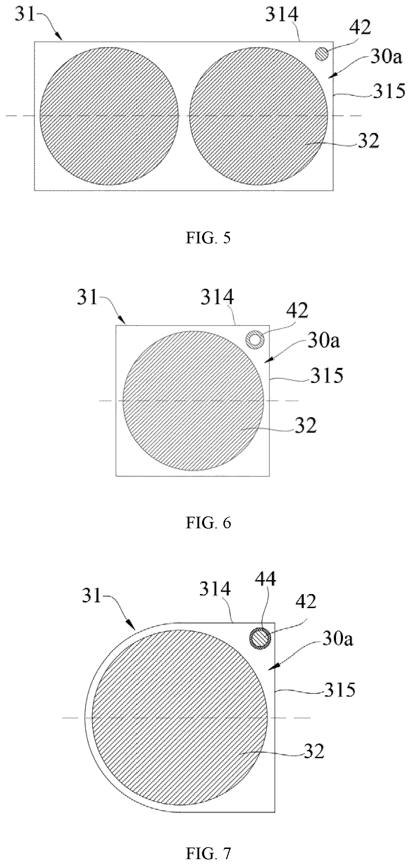

FIG. 5, FIG. 6, and FIG. 7 are schematic cross-sectional views of different battery cells provided in the embodiments of this application in a direction perpendicular to the thickness direction.

As shown in FIG. 5, FIG. 6, and FIG. 7, in some embodiments, the housing 31 has a second wall 314 and a third wall 315 intersecting each other, where the second wall 314 and the third wall 315 extend along a thickness direction X. The second wall 314, the third wall 315, and the adjacent electrode assembly 32 enclose a first accommodation space 30a. The first connecting portion 42 is at least partially accommodated in the first accommodation space 30a.

Optionally, the third wall 315 and the second wall 314 may intersect perpendicularly, or an angle formed by the second wall 314 and the third wall 315 after the connection therebetween and close to the electrode assembly 32 may be an acute angle or an obtuse angle.

Specifically, in a direction perpendicular to the thickness direction X, a cross section of the first accommodation space 30a may be closed or have an opening 311a. The first connecting portion 42 is arranged in the first accommodation space 30a, meaning that a corner formed by the electrode assembly 32, the second wall 314, and third wall 315 is used and the first connecting portion 42 is arranged in that corner, which helps to reduce the additional space occupied by the first connecting portion 42 within the housing 31, thereby increasing the volumetric energy density of the battery cell 30.

Optionally, a portion or the entirety of the first electrode terminal 33 may be arranged opposite the first accommodation space 30a, or the entirety of the first electrode terminal 33 may be staggered with the first accommodation space 30a, in other words, the first electrode terminal 33 and the first accommodation space 30a have no overlapping portions. Herein, the relative positions of the first electrode terminal 33 and the first accommodation space 30a are not limited and can be selected according to actual needs.

In some embodiments, an orthographic projection of at least a portion of the first electrode terminal 33 along the thickness direction X is located within the first accommodation space 30a.

The orthographic projection of at least the portion of the first electrode terminal 33 along the thickness direction X is located within the first accommodation space 30a, meaning that the first electrode terminal 33 is at least partially arranged opposite the first accommodation space 30a along the thickness direction X.

Optionally, along the thickness direction X, the entirety of the first electrode terminal 33 may be arranged opposite the first accommodation space 30a, or one portion of the first electrode terminal 33 may be arranged opposite the first accommodation space 30a, and another portion is staggered with the first accommodation space 30a.

It can be understood that the orthographic projection of at least the portion of the first electrode terminal 33 along the thickness direction X is located within the first accommodation space 30a, so that the first connecting portion 42 can be directly connected to the first electrode terminal 33 after the first connecting portion 42 extends from the first current collecting portion 41 to the first wall 313, without having to extend the first connecting portion 42 a further distance along a direction perpendicular to the thickness direction X before connecting to the first electrode terminal 33. This simplifies the connection structure between the first connecting portion 42 and the first electrode terminal 33.

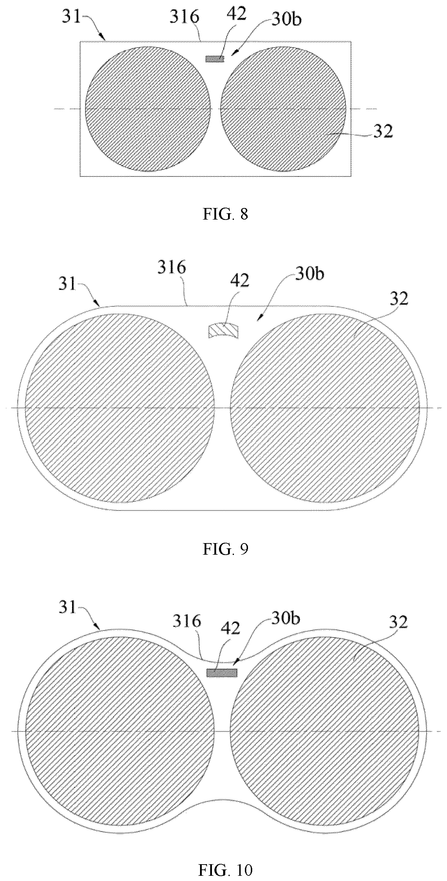

FIG. 8, FIG. 9, and FIG. 10 are schematic cross-sectional views of different battery cells provided in the embodiments of this application in a direction perpendicular to the thickness direction.

As shown in FIG. 8, FIG. 9, and FIG. 10, in some other embodiments, the electrode assembly 32 is provided in plurality, and the body portion 321 of each electrode assembly 32 is generally cylindrical. The housing 31 has a fourth wall 316 extending along the thickness direction X. The adjacent two electrode assemblies 32 and the fourth wall 316 enclose a second accommodation space 30b, and the first connecting portion 42 is at least partially accommodated in the second accommodation space 30b.

Optionally, the electrode assembly 32 may be provided in two or more. The second accommodation space 30b may be formed by the fourth wall 316 and any two adjacent electrode assemblies 32 of the plurality of electrode assemblies 32.

Optionally, the body portions 321 of the plurality of electrode assemblies 32 are generally cylindrical, so a shape of a surface of the body portion 321 lies within an envelope surface of the cylindrical surface. The specific shape of the body portion 321 may be cylindrical, elliptical cylindrical, or polygonal cylindrical, or a surface of the body portion 321 has both a flat surface and a curved surface, which may be configured according to actual needs.

Optionally, the fourth wall 316 may be a flat wall, or the fourth wall 316 may be an arc-shaped wall.

Optionally, along the direction perpendicular to the thickness direction X, the second accommodation space 30b formed by the adjacent two electrode terminals and the fourth wall 316 may be closed, or may have a certain opening 311a.

It can be understood that the first connecting portion 42 is arranged in the second accommodation space 30b, to be specific, the second accommodation space 30b is formed by enclosing any two adjacent electrode assemblies 32 and the fourth wall 316, and then a space between arc-shaped regions of the adjacent two electrode assemblies 32 and the fourth wall 316 is used to arrange the first connecting portion 42, which helps to reduce the additional space occupied by the first connecting portion 42 within the housing 31, thereby increasing the volumetric energy density of the battery cell 30.

Optionally, along the thickness direction X, the first electrode terminal 33 may be completely staggered with the second accommodation space 30b, or the first electrode terminal 33 may be at least partially arranged opposite the second accommodation space 30b.

In some embodiments, an orthographic projection of at least a portion of the first electrode terminal 33 along the thickness direction X is located within the second accommodation space 30b.

The orthographic projection of at least the portion of the first electrode terminal 33 along the thickness direction X is located within the second accommodation space 30b, meaning that at least the portion of the first electrode terminal 33 is arranged opposite the second accommodation space 30b along the thickness direction X.

Optionally, along the thickness direction X, the entirety of the first electrode terminal 33 may be arranged opposite the second accommodation space 30b, or a portion of the first electrode terminal 33 may be arranged opposite the second accommodation space 30b, and another portion is staggered with the second accommodation space 30b.

It can be understood that the orthographic projection of at least the portion of the first electrode terminal 33 along the thickness direction X is arranged within the second accommodation space 30b, so that the first connecting portion 42 may be directly connected to the first electrode terminal 33 after the first connecting portion 42 extends from the first current collecting portion 41 to the first wall 313, without having to extend the first connecting portion 42 a further distance along a direction perpendicular to the thickness direction X before connecting to the first electrode terminal 33. This simplifies the connection structure between the first connecting portion 42 and the first electrode terminal 33.

In the embodiment of the battery cell 30 including a plurality of electrode assemblies 32, the first current collecting member 40 connects the plurality of first electrode terminals 33. The first connecting portion 42 may be connected to an end portion of the first current collecting member 40, or the first connecting portion 42 may be connected to any position between two ends of the first current collecting member 40. This is not limited herein and can be selected according to actual needs.

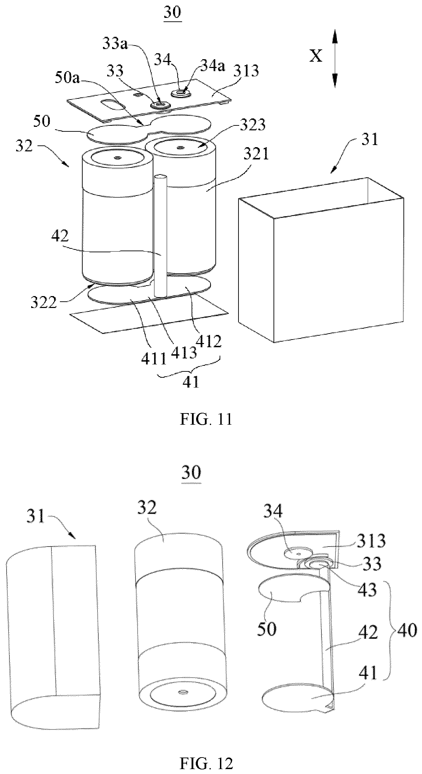

FIG. 11 is a schematic structural diagram of still another battery cell 30 according to an embodiment of this application.

As shown in FIG. 11, in some embodiments, the electrode assembly 32 is provided in N, and the first current collecting portion 41 includes a first current collecting sub-portion 411, a second current collecting sub-portion 412, and a connecting sub-portion 413. The first connecting portion 42 is connected to the connecting sub-portion 413. The connecting sub-portion 413 connects the first current collecting sub-portion 411 and the second current collecting sub-portion 412. The first current collecting sub-portion 411 is connected to N1 first tabs 322, and the second current collecting sub-portion 412 is connected to N2 first tabs 322; where N≥2, N1≥1, N2≥1, and N, N1, and N2 are all positive integers, N1+N2=N, and |N1-N2|≤1.

Optionally, the first current collecting sub-portion 411, the second current collecting sub-portion 412, and the connecting sub-portion 413 may be integrally formed, or may be formed separately and then connected through welding or in other means, which may be arranged according to specific needs.

Optionally, the plurality of electrode assemblies 32 may be arranged in a single direction, or the plurality of electrode assemblies 32 may be arranged in a plurality of directions, for example, the plurality of electrode assemblies 32 are arranged in a "V" shape.

With |N1-N2|≤1, as N1 and N2 are both positive integers, N1=N2, or an absolute value of a difference between N1 and N2 is 1, in other words, N1 is 1 greater than N2, or N1 is 1 less than N2. In this way, in an embodiment where the electrode assembly 32 in the battery cell 30 is provided in even, a quantity of first tabs 322 connected by the first current collecting sub-portion 411 is equal to a quantity of first tabs 322 connected by the second current collecting sub-portion 412. In an embodiment where the electrode assembly 32 in the battery cell 30 is provided in odd, a quantity of first tabs 322 connected by the first current collecting sub-portion 411 and a quantity of first tabs 322 connected by the second current collecting sub-portion 412 differ by 1.

In this way, magnitudes of currents flowing from two sides of the connecting sub-portion 413, that is, the first current collecting sub-portion 411 and the second current collecting sub-portion 412, to the connecting sub-portion 413 are as equal as possible, or a difference thereof is minimized, which helps to improve the overall current-carrying capacity of the first current collecting portion 41, reduces the risk of temperature rise caused by excessive current in the first current collecting portion 41, and further improves the working safety of the battery cell 30.

In some embodiments, the first connecting portion 42 is provided with a fuse portion, where the fuse portion is configured to be blown when a current flowing through the fuse portion reaches a threshold.

Optionally, along a direction perpendicular to the thickness direction X, a cross-sectional area of the fuse portion may be set to be smaller than a cross-sectional area of another portion of the first connecting portion 42. Alternatively, a material of the fuse portion may be different from a material of another portion of the first connecting portion 42.

Specifically, when the current in the first connecting portion 42 reaches a threshold, the fuse portion will be blown, interrupting the connection between the first connecting portion 42 and the first electrode terminal 33, which causes an open circuit inside the battery cell 30 to prevent further temperature rise of the battery cell 30, reduce the risk of temperature rise due to excessive current in the battery cell 30, and reduce the risk of higher current flowing to other parts of the battery 10 to avoid a broader range of temperature rise, thereby further improving the working safety of the battery cell 30.

Optionally, to achieve the insulation between the first current collecting member 40 and the electrode assembly 32, the first current collecting member 40 and the electrode assembly 32 may be spaced apart from each other, or an insulating member may be provided therebetween.

In some embodiments, the first current collecting member 40 further includes an insulating layer 44, where the insulating layer 44 envelops at least a portion of the first connecting portion 42 to insulate and separate the first connecting portion 42 from the body portion 321.

Optionally, a material of the insulating layer 44 may include at least one of polypropylene, polyethylene, and rubber.

Optionally, the insulating layer 44 may be coated on a portion of the first connecting portion 42 arranged opposite the body portion 321 along a direction perpendicular to the thickness direction X, or the insulating layer 44 may be coated on the entire position of the first connecting portion 42 along an extension direction of the first connecting portion 42.

It can be understood that the insulating layer 44 is arranged to cover at least a portion of the first connecting portion 42, which can reduce the risk of internal short circuit of the battery cell 30 caused by an electrical connection between the first connecting portion 42 and the body portion 321 of the electrode assembly 32, and can also reduce the risk of short circuit between the first connecting portion 42 and the housing 31, thereby improving the working safety of the battery cell 30.

FIG. 12 is a schematic structural diagram of still another battery cell 30 according to an embodiment of this application.

As shown in FIG. 12, in some embodiments, the first current collecting member 40 further includes a second connecting portion 43, where the second connecting portion 43 is connected to an end of the first connecting portion 42 far away from the first current collecting portion 41 and bent relative to the first connecting portion 42, and the second connecting portion 43 is configured to connect the first electrode terminal 33.

Specifically, the second connecting portion 43 may be bent relative to the first connecting portion 42 along the direction perpendicular to the thickness direction X and connected to the first connecting portion 42. Such an arrangement allows for the reasonable positioning of the first electrode terminal 33 based on the overall spatial layout of the battery cell 30 and achieves the electrical connection between the first electrode terminal 33 and the first tab 322.

Optionally, the second connecting portion 43 and the first electrode terminal 33 may be connected through riveting or welding. In an embodiment where the second connecting portion 43 is welded to the first electrode terminal 33, the welding operation may be performed for the second connecting portion 43 and the first electrode terminal 33 from a side of the first wall 313 close to the electrode assembly 32, or the welding operation may be performed for the second connecting portion 43 and the first electrode terminal 33 from a side of the first wall 313 far away from the first electrode assembly 32, in other words, the first electrode terminal 33 and the second connecting portion 43 are welded using a penetration welding process.

In an embodiment where the first electrode terminal 33 and the second connecting portion 43 are welded using a penetration welding process, to reduce the difficulty of penetration welding, the entirety of the first electrode terminal 33 may be set as a thin-walled structure, or a first concave portion 33a may be provided on the first electrode terminal 33, and a thickness of the first concave portion 33a along the thickness direction X is set to be smaller than a thickness of another portion of the first electrode terminal 33.

Optionally, the first concave portion 33a may be arranged on a side of the first electrode terminal 33 facing the electrode assembly 32, or the first concave portion 33a may be arranged on a side of the first electrode terminal 33 facing away from the electrode assembly 32, which may be selected according to actual needs.

In some embodiments, a first concave portion 33a is provided on a side of the first electrode terminal 33 facing away from the electrode assembly 32, and a bottom wall of the first concave portion 33a abuts against the second connecting portion 43 and is welded to the second connecting portion 43.

Specifically, the penetration welding process is used to weld the first electrode terminal 33 and the second connecting portion 43 from the side of the first wall 313 far away from the electrode assembly 32, compared to welding the first electrode terminal 33 from the side of the first wall 313 close to the electrode assembly 32, there is no need to bend the second connecting portion 43, thus reducing the internal space of the housing 31 and increasing the volumetric energy density of the battery cell 30.

Additionally, the first concave portion 33a is arranged on the side of the first electrode terminal 33 facing away from the electrode assembly 32, and the bottom wall of the first concave portion 33a is arranged to abut against the second connecting portion 43 and be welded to the second connecting portion 43. During the penetration welding, the bottom wall of the first concave portion 33a penetrates a bottom wall of the first electrode terminal 33 and is welded to the second connecting portion 43. Therefore, such an arrangement can reduce the difficulty of penetration welding, improve welding efficiency, and enhance welding quality.

Optionally, the second electrode terminal 34 and the second tab 323 may be directly connected, or connected through an intermediate connector, which may be selected according to actual needs and is not limited herein.

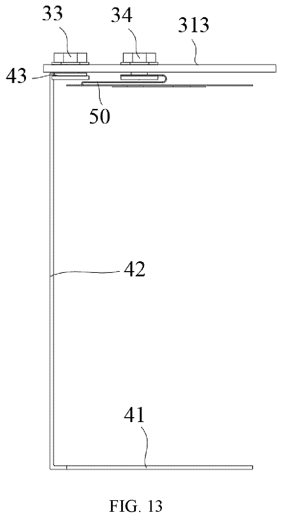

FIG. 13 is a schematic structural diagram of a battery cell according to an embodiment of this application with an electrode assembly and a portion of a housing omitted.

As shown in FIG. 11 to FIG. 13, in some embodiments, the battery cell 30 further includes a second current collecting member 50, where the second current collecting member 50 is at least partially located between the second electrode terminal 34 and the second tab 323, and is configured to connect the second electrode terminal 34 and the second tab 323.

Optionally, the second current collecting member 50 may be in a form of sheet or may be bent into plurality of folds.

As shown in FIG. 11, in an embodiment where the second current collecting member 50 is in a form of sheet, a second concave portion 34a may be arranged on a side of the second electrode terminal 34 facing away from the electrode assembly 32, and a bottom wall of the second concave portion 34a abuts against the second current collecting member 50 and is welded to the second current collecting member 50. This allows the second electrode terminal 34, the second current collecting member 50, and the second tab 323 to be connected through penetration welding.

As shown in FIG. 13, in an embodiment where the second current collecting member 50 is bent into a plurality of folds, as there is enough space, the second current collecting member 50 and the second electrode terminal 34, as well as the second current collecting member 50 and the second tab 323, may be respectively welded together from a side of the second electrode terminal 34 close to the second current collecting member 50.

It can be understood that for the battery cell 30 with a plurality of electrode assemblies 32, arrangement of the second current collecting member 50 allows the plurality of second tabs 323 to be connected through the second current collecting member 50, which facilitates the connection of the plurality of second tabs 323 to the same second electrode terminal 34, thereby improving the installation convenience of the battery cell 30.

It can be understood that as the second tab 323 is arranged at an end of the body portion 321 close to the first wall 313, the second electrode terminal 34 may be arranged at a position on the first wall 313 opposite any one of the second tabs 323, which facilitates the electrical connection between the second electrode terminal 34 and the second tab 323.

Optionally, the first electrode terminal 33 may be arranged at a position of the first wall 313 opposite the body portion 321, or the first electrode terminal 33 may be arranged at a position of the first wall 313 staggered from the body portion 321, which may be selected according to actual needs and is not limited herein.

In some embodiments, the second current collecting member 50 has a notch 50a at its edge, and the first electrode terminal 33 is arranged opposite the notch 50a along the thickness direction X.

Optionally, when the first electrode terminal 33 is arranged opposite the notch 50a, a projection of the first electrode terminal 33 along the thickness direction X may be located within the notch 50a, or a projection of the first electrode terminal 33 along the thickness direction X may partially overlap with the notch 50a.

Specifically, on a path extending the first current collecting member 40 from the second tab 323 to the first electrode terminal 33, the notch 50a may be used to provide a passage through the first current collecting member 40 for the first current collecting member 40, so that the first current collecting member 40 and the second current collecting member 50 are spaced apart from each other, reducing the risk of internal short circuit within the battery cell 30 due to contact between the first current collecting member 40 and the second current collecting member 50.

Optionally, the notch 50a may be formed on an edge of any side of the second current collecting member 50. For example, in the embodiment of the battery cell 30 including a plurality of electrode assemblies 32, the notch 50a may be formed at a position corresponding to a region between any two adjacent electrode assemblies 32 to correspond to a position at which the first electrode terminal 33 is arranged, which facilitates the connection between the first electrode terminal 33 and the first current collecting member 40. The notch 50a is arranged on the second current collecting member 50, the position of the first electrode terminal 33 can be flexibly set by reasonably setting the size and position of the notch 50a, which helps to fully utilize the space within the housing 31, and increase the volumetric energy density of the battery cell 30 as much as possible.

A battery 10 provided in an embodiment of this application includes the battery cell 30 according to any one of the foregoing embodiments.

The battery 10 provided in this embodiment of this application uses the battery cell 30 according to any one of the foregoing embodiments, and the first electrode terminal 33 and the second electrode terminal 34 are arranged at the same end of the battery cell 30. Therefore, during connection of a plurality of battery cells 30 in series or parallel, it is only necessary to connect the first electrode terminals 33 and the second electrode terminals 34 of the battery cells 30 in a one-to-one correspondence respectively at one end of the battery cell 30 through busbars. This reduces the space occupied by the battery cells 30 after series or parallel connection, thereby increasing the volumetric energy density of the battery 10. Additionally, the housing 31 of the battery cell 30 is uncharged during working of the battery 10, which helps to improve the working safety of the battery 10.

An electric apparatus provided in an embodiment of this application includes the battery 10 according to the foregoing embodiments.

The electric apparatus provided in this embodiment of this application has the same technical effects as the battery 10 provided in any of the foregoing embodiments, and therefore will not be described in detail herein.

It should be noted that in absence of conflicts, some embodiments and features in some embodiments in this application may be combined with each other.

In conclusion, it should be noted that the foregoing embodiments are merely intended for describing the technical solutions of this application, but not for limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the spirit and scope of the technical solutions in the embodiments of this application.

## Claims

1. A battery cell, comprising:
a housing comprising a first wall;
at least one electrode assembly accommodated in the housing, wherein the electrode assembly comprises a body portion, a first tab, and a second tab, the first tab is led out from an end of the body portion along a thickness direction of the first wall facing away from the first wall, and the second tab is led out from an end of the body portion along the thickness direction facing the first wall;
a first electrode terminal and a second electrode terminal, both arranged on the first wall, wherein the second electrode terminal is electrically connected to the second tab; and
a first current collecting member accommodated in the housing and configured to electrically connect the first tab and the first electrode terminal.

2. The battery cell according to claim 1, wherein the first current collecting member comprises a first current collecting portion and a first connecting portion, the first current collecting portion is located on a side of the first tab facing away from the body portion and connected to the first tab, and the first connecting portion is bent relative to the first current collecting portion and configured to connect the first current collecting portion and the first electrode terminal.

3. The battery cell according to claim 2, wherein the first connecting portion is located on the outside of the body portion and arranged parallel to the body portion.

4. The battery cell according to claim 3, wherein:
the housing has a second wall and a third wall intersecting each other, the second wall and the third wall extend along the thickness direction, and the second wall, the third wall, and the adjacent electrode assembly enclose a first accommodation space; and
the first connecting portion is at least partially accommodated in the first accommodation space.

5. The battery cell according to claim 4, wherein an orthographic projection of at least a portion of the first electrode terminal along the thickness direction is located within the first accommodation space.

6. The battery cell according to claim 3, wherein the electrode assembly is provided in plurality, the body portion of each electrode assembly is generally cylindrical, the housing has a fourth wall extending along the thickness direction, adjacent two electrode assemblies and the fourth wall enclose a second accommodation space, and the first connecting portion is at least partially accommodated in the second accommodation space.

7. The battery cell according to claim 6, wherein an orthographic projection of at least a portion of the first electrode terminal along the thickness direction is located within the second accommodation space.

8. The battery cell according to any one of claims 2 to 7, wherein the electrode assembly is provided in N, the first current collecting portion comprises a first current collecting sub-portion, a second current collecting sub-portion, and a connecting sub-portion, the first connecting portion is connected to the connecting sub-portion, the connecting sub-portion connects the first current collecting sub-portion and the second current collecting sub-portion, the first current collecting sub-portion is connected to N1 first tabs, and the second current collecting sub-portion is connected to N2 first tabs;
wherein N≥2, N1≥1, N2≥1, N, N1, and N2 are all positive integers, N1+N2=N, and |N1-N2|≤1.

9. The battery cell according to any one of claims 2 to 8, wherein the first connecting portion is provided with a fuse portion, and the fuse portion is configured to be blown when a current flowing through the fuse portion reaches a threshold.

10. The battery cell according to any one of claims 2 to 9, wherein the first current collecting member further comprises an insulating layer, and the insulating layer envelops at least a portion of the first connecting portion to insulate and separate the first connecting portion from the body portion.

11. The battery cell according to any one of claims 2 to 10, wherein the first current collecting member further comprises a second connecting portion, and the second connecting portion is connected to an end of the first connecting portion far away from the first current collecting portion and bent relative to the first connecting portion; and
the second connecting portion is configured to connect the first electrode terminal.

12. The battery cell according to claim 11, wherein a first concave portion is provided on a side of the first electrode terminal facing away from the electrode assembly, and a bottom wall of the first concave portion abuts against the second connecting portion and is welded to the second connecting portion.

13. The battery cell according to any one of claims 1 to 12, further comprising a second current collecting member, wherein the second current collecting member is at least partially arranged between the second electrode terminal and the second tab and is configured to connect the second electrode terminal and the second tab.

14. The battery cell according to claim 13, wherein the second current collecting member has a notch at its edge, and the first electrode terminal is arranged opposite the notch along the thickness direction.

15. A battery, comprising the battery cell according to any one of claims 1 to 14.

16. An electric apparatus, comprising the battery according to claim 15, wherein the battery is configured to supply electrical energy.
